# EUROPEAN PATENT APPLICATION

(11) **EP 4 780 015 A1**
(43) Date of publication of application: **22.07.2026**
(21) Application number: 24869916.7
(22) Date of filing: 27.06.2024
(51) Int. Cl.: H04Q 11/00

(54) **DATA TRANSMISSION METHOD FOR PASSIVE OPTICAL NETWORK (PON), AND STORAGE MEDIUM AND ELECTRONIC APPARATUS**

(30) Priority: 27.09.2023 CN 202311282233
(71) Applicant: ZTE CORPORATION, Shenzhen, Guangdong 518057 (CN)
(72) Inventor: LIU, Ruixin, Shenzhen, Guangdong 518057 (CN); HUANG, Xingang, Shenzhen, Guangdong 518057 (CN); ZHAN, Zhiguo, Shenzhen, Guangdong 518057 (CN); ZHANG, Weiliang, Shenzhen, Guangdong 518057 (CN)
(74) Representative: Deambrogi, Edgardo
(86) International application number: PCT/CN2024/102075
(87) International publication number: WO 2025/066357

(57) **Abstract**

Provided are a data transmission method for a passive optical network (PON), and a storage medium and an electronic apparatus. An optical line terminal (OLT) detects a service transmission condition of each subcarrier, and selects a subcarrier as a windowing subcarrier; the OLT sends a downlink broadcast signal to each subcarrier, to match a corresponding idle windowing subcarrier for a newly accessed optical network unit (ONU); the OLT receives uplink registration information of the ONU through the idle windowing subcarrier, to perform data transmission.

## Description

### Cross-Reference to Related Application

The present invention is based on and claims the benefit of priority of Chinese Patent Application No. CN202311282233.0, filed on September 27 2023 and entitled "Data transmission method for passive optical network (PON), and storage medium and electronic apparatus", the disclosure of which is incorporated herein by reference in its entirety.

### Technical Field

Embodiments of the present disclosure relate to the field of communications, and in particular, to a data transmission method for a passive optical network (PON), and a storage medium and an electronic apparatus.

### Background

A traditional passive optical network (PON) implements multi-user access based on Time Division Multiplexing (TDM), and implements multiplexing of a transmission channel by using a time slice manner, that is, each channel of signal transmission uses entire bandwidths of a channel, but only uses a certain timeslot therein. When a user does not send data, a timeslot allocated to the user by the TDM frame can only be in an idle state, and even if other users send data all the time, these idle timeslots cannot be used, resulting in a low utilization rate of the channel after multiplexing. In order to improve the channel utilization rate, statistical time division multiplexing (STDM) was developed. STDM is a method for allocating a media resource on demand. A resource is allocated only when a user has data to be sent, and the resource is not allocated if the user suspends data transmission. Therefore, the same multiplexing channel can be used by more users, thereby improving the channel utilization rate.

However, there are many problems with TDM-PON. First, in a TDM-PON, a plurality of users share the same channel in a physical layer through time division, and although the bandwidth can be shared to the greatest extent, the bandwidth cannot be dedicated physically, making it difficult to implement a hard pipe in the physical layer. Secondly, the TDM-PON supports uplink data transmission of a plurality of Optical Network Units ( ONU) on one wavelength channel, and in order to find a newly accessed or newly powered ONU in time, an Optical Line Terminal (OLT) PON port side needs to open a window regularly, so as to complete processes, such as registration and ranging, required for the new ONU to access the OLT. The data frame must be sent in the sending window allocated by the OLT, and during the windowing period, all the ONUs in the normal working state suspend sending the uplink data, which brings a larger delay.

In conclusion, in the related art, when TDM-PON data transmission is performed, a problem of high delay and low transmission efficiency exists.

### Summary

Embodiments of the present disclosure provide a data transmission method for a passive optical network (PON), and a storage medium and an electronic apparatus.

According to an embodiment of the present disclosure, provided is a data transmission method for a passive optical network (PON), including: detecting, by an optical line terminal (OLT), a service transmission condition of each subcarrier, and selecting a subcarrier as a windowing subcarrier; sending, by the OLT, a downlink broadcast signal to each subcarrier, to match a corresponding idle windowing subcarrier for a newly accessed optical network unit (ONU); and receiving, by the OLT, uplink registration information of the ONU through the idle windowing subcarrier, to perform data transmission.

According to another embodiment of the present disclosure, a computer-readable storage medium is further provided. The computer-readable storage medium stores a computer program. The computer program is configured to, when being run, implement steps in any one of the above method embodiments.

According to yet another embodiment of the present disclosure, an electronic apparatus is further provided and includes a memory and a processor. The memory stores a computer program. The processor is configured to run the computer program to execute steps in any one of the above method embodiments.

### Brief Description of the Drawings

Fig. 1 is a hardware structure block diagram of a computer terminal in a data transmission method for a PON according to an embodiment of the present disclosure.
Fig. 2 is a schematic diagram of a multi-subcarrier architecture of a high speed PON according to an embodiment of the present disclosure.
Fig. 3 is a flowchart of a data transmission method for a PON according to an embodiment of the present disclosure.
Fig. 4 is a structural block diagram of a data transmission apparatus for a PON according to an embodiment of the present disclosure.
Fig. 5 is a schematic diagram illustrating the principle of ONU online registration in the related art.
Fig. 6 is a schematic diagram of distribution of a low-bandwidth sub-band ONU on a frequency band according to an embodiment of the present disclosure.
Fig. 7 is a flowchart of a data transmission method for a PON according to an embodiment of the present disclosure.
Fig. 8 is a block diagram of a physical synchronization block PSBd according to an embodiment of the present disclosure.
Fig. 9 is a schematic diagram of a downstream FS frame structure according to an embodiment of the present disclosure.

### Detailed Description of the Embodiments

Hereinafter, embodiments of the present disclosure will be described in detail with reference to the accompanying drawings and embodiments.

It should be noted that terms such as "first" and "second" in the description and claims of the embodiments of the present disclosure and the drawings are used to distinguish similar objects, and are not necessarily used to describe a specific sequence or order.

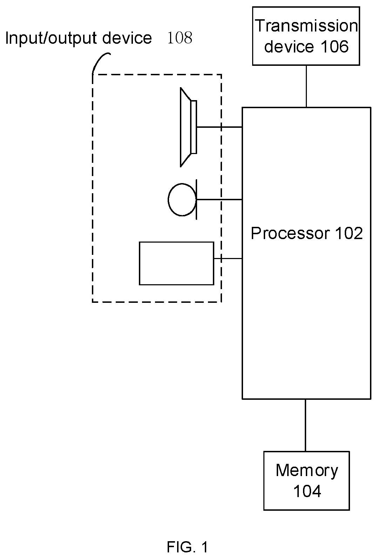

The method embodiments provided in the embodiments of the present invention may be implemented in a mobile terminal, a computer terminal, or a similar computing device. Taking the computer terminal running as an example, Fig. 1 is a hardware structure block diagram of a computer terminal in a data transmission method for a PON according to an embodiment of the present disclosure. As shown in Fig. 1, the computer terminal may include one or more (only one is shown in Fig. 1) processor 102 (the processor 102 may include, but are not limited to, a microprocessor MCU or a processing apparatus such as a programmable logic device FPGA) and a memory 104 for storing data, wherein the computer terminal can further include a transmission device 106 and an input/output device 108 for a communication function. A person of ordinary skill in the art may understand that the structure shown in Fig. 1 is merely exemplary, which does not limit the structure of the foregoing computer terminal. For example, the computer terminal may further include more or less components than shown in Fig. 1, or have a different configuration from that shown in Fig. 1.

The memory 104 may be configured to store a computer program, for example, a software program and a module of application software, such as a computer program corresponding to the data transmission method for the PON in the embodiment of the present disclosure. The processor 102 runs the computer program stored in the memory 104, so as to execute various function applications and data processing, that is, to implement the foregoing method. Memory 104 may include high-speed random access memory, and may also include non-volatile memory, such as one or more magnetic storage devices, flash memory, or other non-volatile solid-state memory. In some instances, memory 104 may further include memory remotely located with respect to processor 102, which may be connected to mobile terminals over a network. Examples of such networks include, but are not limited to, the Internet, intranets, local area networks, mobile communication networks, and combinations thereof.

The transmission device 106 is used to receive or send data via a network. Specific examples of the described network may include a wireless network provided by a communication provider of the computer terminal. In one example, the transmission device 106 may include a network interface controller (NIC) that may interface with other network devices via a base station to communicate with the Internet. In one example, the transmission device 106 may be a radio frequency (RF) module for communicating wirelessly with the Internet.

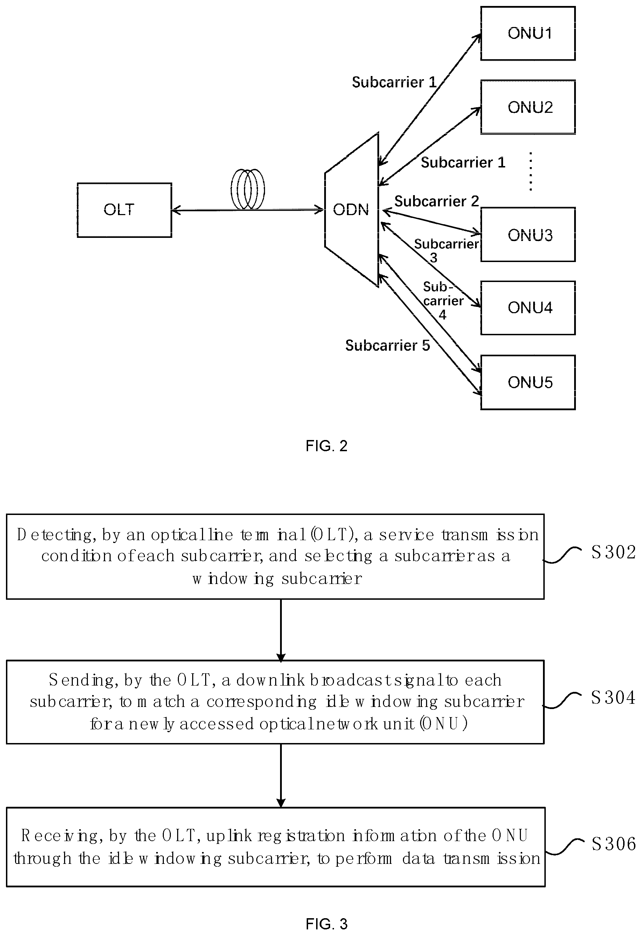

The embodiments of the present invention may operate on the network architecture shown in Fig. 2. Fig. 2 is a schematic diagram of a multi-subcarrier architecture of a high speed PON according to an embodiment of the present disclosure. As shown in Fig. 2, the network architecture includes an optical line terminal (OLT), an optical distribution network (ODN), and a plurality of optical network units (ONUs). The topological structure of the PON still adopts a form of point-to-multipoint. For a multi-subcarrier technology route, a plurality of ONUs may correspond to one subcarrier form, with each ONU sending uplink data (e.g., ONU1, ONU2) to the OLT in a time division manner; or a single ONU may correspond to a single subcarrier, sending uplink data (e.g., ONU3, ONU4) to the OLT in a frequency division manner; or a single ONU may correspond to a plurality of subcarriers, as shown in ONU5. An OLT Medium Access Control (MAC) performs ONU scheduling and allocation according to traffic, so that traffic on each subcarrier is as stable as possible. This architecture classifies different ONUs, and allocates them to different subcarriers according to parameters, such as reliability and time delay requirements, so that the flexible multiplexing advantages of TDM and the hard pipe advantages of FDM are fully utilized, requirements of different applications in different scenarios are met, and network resources are maximally utilized.

The present embodiment provides a data transmission method for a PON operating on the above computer terminal or network architecture. Fig. 3 is a flowchart of a data transmission method for a PON according to an embodiment of the present disclosure. As shown in Fig. 3, the flow includes the following steps:
Step S302, detecting, by an optical line terminal (OLT), a service transmission condition of each subcarrier, and selecting a subcarrier as a windowing subcarrier.

In an exemplary embodiment, the detecting, by an optical line terminal (OLT), a service transmission condition of each subcarrier, and selecting a subcarrier as a windowing subcarrier includes: detecting, by the OLT, the service transmission condition of each subcarrier, and selecting a subcarrier with the least amount of service transmission as the windowing subcarrier; or, detecting, by the OLT, the service transmission condition of each subcarrier, and selecting a subcarrier whose service transmission is less than or equal to a service transmission threshold as the windowing subcarrier.

In a practical implementation process, the service transmission threshold may be set according to experience or practical situations, and subcarriers less than or equal to the service transmission threshold are a plurality of subcarriers. In practice, when there is a plurality of subcarriers with the least amount of service transmission, one of the subcarriers may be selected as the windowing subcarrier.

In an exemplary embodiment, after the selecting a subcarrier as a windowing subcarrier, the method further includes: detecting, by the OLT, whether a delay-sensitive service exists on the windowing subcarrier, and if the delay-sensitive service exists, migrating the delay-sensitive service to a non-windowing subcarrier that has remaining bandwidth in the OLT for transmission.

In a practical implementation process, a service may also be transmitted on a subcarrier selected as a windowing subcarrier. For a windowing subcarrier with a delay-sensitive service, in order to ensure that the service transmission is not affected, the delay-sensitive service needs to be migrated to a non-windowing subcarrier with remaining bandwidth for transmission. In this way, the windowing subcarrier becomes an idle windowing subcarrier, thereby better transmitting service data of a newly accessed ONU. In a practical implementation process, if there is no non-windowing subcarrier with the remaining bandwidth, the windowing subcarrier with delay-sensitive service can also be directly subjected to windowing operation, since the subcarrier which has the least amount of service transmission in the system is selected as the windowing subcarrier, although the direct windowing operation may affect the service being transmitted, the overall impact on the system can also be guaranteed to be the comprehensively lowest.

In an exemplary embodiment, before the detecting, by an optical line terminal (OLT), a service transmission condition of each subcarrier, the method further includes: configuring a plurality of subcarriers for the optical line terminal (OLT), wherein overhead portions of physical data frames (PHY) of downlink ports of each subcarrier are synchronized with each other.

Step S304, sending, by the OLT, a downlink broadcast signal to each subcarrier, to match a corresponding idle windowing subcarrier for a newly accessed optical network unit (ONU).

In an exemplary embodiment, matching the corresponding idle windowing subcarrier for the newly accessed optical network unit (ONU) includes: detecting, by the OLT, whether a first sub-band of the newly accessed optical network unit (ONU) contains an idle windowing subcarrier; in response to a positive detection result, adjusting the ONU, within the first sub-band, to the idle windowing subcarrier; in response to a negative detection result, adjusting the first sub-band of the ONU to a second sub-band where the idle windowing subcarrier is located, and adjusting the ONU, within the second sub-band, to the idle windowing subcarrier; or, updating detection of the idle windowing subcarrier at fixed time intervals, so that the ONU matches the corresponding idle windowing subcarrier; or, adjusting the second sub-band and the first sub-band to a third sub-band at the same time, and adjusting the ONU, within the third sub-band, to the idle windowing subcarrier.

In a practical implementation process, the third solution can be regarded as a combination of the first solution and the second solution, because in the third solution, a new idle windowing subcarrier is generated as the system is dynamic, so that the ONU successfully matches the corresponding idle windowing subcarrier. In fact, it can also be considered as adjusting the band where the idle windowing subcarrier is located, which is not limited here.

In an exemplary embodiment, the sending, by the OLT, a downlink broadcast signal to each subcarrier includes: sending, by the OLT, the downlink broadcast signal to each subcarrier using a super-frame counter that performs synchronous counting.

In an exemplary embodiment, the method further includes: when the first sub-band of the ONU is adjusted to the second sub-band where the idle windowing subcarrier is located, after the OLT receives the uplink registration information of the ONU through the idle windowing subcarrier, adjusting the ONU from the second sub-band to the first sub-band.

Step S306: receiving, by the OLT, uplink registration information of the ONU through the idle windowing subcarrier, to perform data transmission.

In an exemplary embodiment, the method further includes: re-selecting a new windowing subcarrier according to the service transmission condition of each subcarrier, to perform data transmission for the newly accessed ONU.

In an exemplary embodiment, after the receiving, by the OLT, uplink registration information of the ONU through the idle windowing subcarrier, the method further includes: sending, by the ONU, data to the OLT by means of time division multiplexing (TDM) or frequency division multiplexing (FDM).

By means of the described steps, provided is a data transmission method for a passive optical network (PON). An optical line terminal (OLT) detects a service transmission condition of each subcarrier, and selects a subcarrier whose service transmission is less than or equal to a service transmission threshold as the windowing subcarrier, the OLT sends a downlink broadcast signal to each subcarrier, to match a corresponding idle windowing subcarrier for a newly accessed optical network unit (ONU); the OLT receives uplink registration information of the ONU through the idle windowing subcarrier, to perform data transmission. This solves the problems of high delay and low transmission efficiency when TDM-PON data transmission is performed in the related art, and achieves the effects of reducing the TDM-PON data transmission delay and improving the data transmission efficiency.

Through the description of the foregoing embodiments, a person skilled in the art may clearly understand that the method according to the foregoing embodiments may be implemented by software in addition to a necessary universal hardware platform, and definitely may also be implemented by hardware. However, in many cases, the former is a preferred implementation. Based on such understanding, the technical solutions of the embodiments of the present disclosure essentially or the part contributing to the prior art may be embodied in the form of a software product, the computer software product is stored in a storage medium (such as a ROM/RAM, a magnetic disk, and an optical disk), and includes several instructions for instructing a terminal device (which may be a mobile phone, a computer, a server, a network device, or the like) to execute the methods described in the embodiments of the present disclosure.

The present embodiment further provides a data transmission apparatus for a PON, which is configured to implement the described embodiments and preferred implementations, and what has been described will not be elaborated. The term "module", as used hereinafter, is a combination of software and/or hardware capable of realizing a predetermined function. Although the apparatus described in the following embodiment is preferably implemented by software, implementation of hardware or a combination of software and hardware is also possible and conceived.

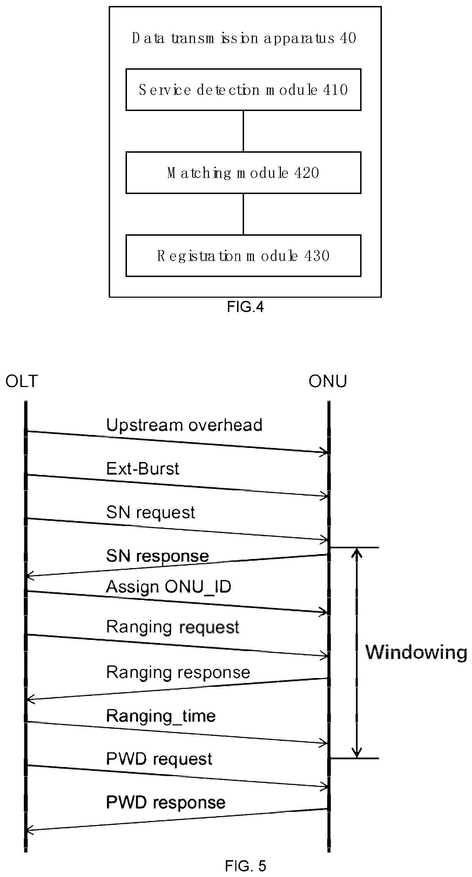

Fig. 4 is a structural block diagram of a data transmission apparatus for a PON according to an embodiment of the present disclosure. As shown in Fig. 4, the data transmission device 40 includes: a service detection module 410, configured to detect a service transmission condition of each subcarrier, and select a subcarrier as a windowing subcarrier; a matching module 420, configured to send a downlink broadcast signal to each subcarrier, to match a corresponding idle windowing subcarrier for a newly accessed optical network unit (ONU); a registration module 430, configured to receive uplink registration information of the ONU through the idle windowing subcarrier, to perform data transmission.

It should be noted that each of the above modules may be implemented by software or hardware. For the latter, it may be implemented in the following manner, but is not limited thereto: all the modules are located in a same processor; alternatively, each of the above modules are located in different processors in any combination. In an actual implementation process, the above data transmission device can implement each step of the data transmission method in the foregoing embodiments; therefore, the data transmission device can be divided into modules or units with different functions, and function division and naming of different modules or units are not specifically limited herein.

Embodiments of the present disclosure further provide a computer-readable storage medium. The computer-readable storage medium stores a computer program. The computer program is configured to, when being run, implement steps in any one of the above method embodiments.

In an exemplary embodiment, the computer-readable storage medium may include, but is not limited to, any medium that can store a computer program, such as a USB flash drive, a Read-Only Memory (ROM), a Random Access Memory (RAM), a mobile hard disk, a magnetic disk, or an optical disc.

Embodiments of the present disclosure further provide an electronic apparatus, including a memory and a processor. The memory stores a computer program. The processor is configured to run the computer program to execute steps in any one of the above method embodiments.

In an exemplary embodiment, the electronic apparatus may further include a transmission device and an input/output device, wherein the transmission device is connected to the processor, and the input/output device is connected to the processor.

For specific examples in this embodiment, refer to the examples described in the foregoing embodiments and the exemplary implementations, and this embodiment will not be repeated thereto.

It is apparent that those skilled in the art should understand that the above mentioned modules or steps of the above embodiments of the present disclosure may be implemented by a general computing device, and may also be gathered together on a single computing device or distributed in network composed of multiple computing devices. The above mentioned modules or steps of the present invention may be implemented with program codes executable by the computing device, so that may be stored in a storage device for execution by the computing device, and in some cases, the steps shown or described may be performed in a different sequence than herein, or can be fabricated into individual integrated circuit modules respectively, or multiple modules or steps thereof are fabricated into a single integrated circuit module for implementation. In this way, embodiments of the present disclosure are not limited to any specific combination of hardware and software.

In order to enable those skilled in the art to better understand the technical solutions of the embodiments of the present disclosure, descriptions will be given below with reference to scenario embodiments.

### Embodiment 1

Fig. 5 is a schematic diagram illustrating the principle of ONU online registration in the related art. As shown in Fig. 5, when a new ONU registers online, since the ONU has not undergone a ranging process, it cannot perform an interaction process simultaneously with online ONUs, and a dedicated period of time must be prepared for its online registration. An interaction process between the OLT and the ONU reserves a certain period of time for a registration process for the newly online ONU. During this period, all online ONUs in operation must temporarily delay transmission. The reserved time is equivalent to opening a registration and ranging window on a data transmission channel. The registration and ranging window is related to the distance of the ONU newly added to the system, typically about 250 µs, and causes a delay for all other online ONUs. The traditional PON technology adopts an uplink TDM working mode, and in order to find a newly accessed ONU in time, the OLT PON port side needs to open a window regularly, so as to complete processes, such as registration and ranging, required for the new ONU to access the OLT. During the windowing period, all the ONUs in the normal working state suspend sending the uplink data, causing a delay.

In view of the problems such as large delay in the traditional TDM-PON, the multi-subcarrier TFDM designed in the embodiments of the present disclosure provides the following solutions.

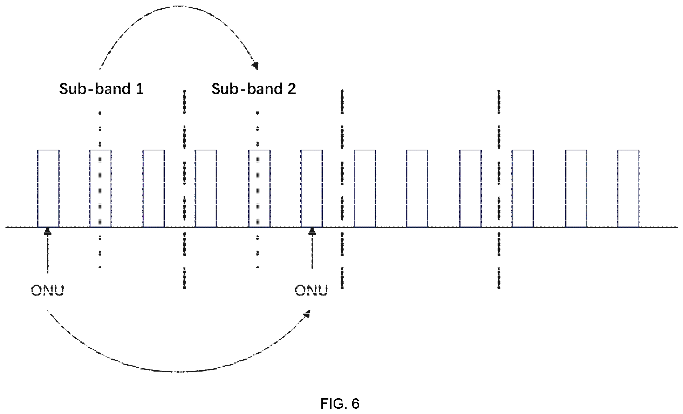

Considering the cost factor of ONUs, compared with ONUs supporting the entire frequency band, the embodiments of the present disclosure select ONUs supporting a small-bandwidth sub-band. Such an ONU operates within a certain range outside its own center frequency, forming a sub-band of the ONU on the frequency band. Fig. 6 is a schematic diagram of distribution of a low-bandwidth sub-band ONU on a frequency band according to an embodiment of the present disclosure. As shown in Fig. 6, for each individual such ONU, the frequency band may be equally sliced according to the size of its sub-band, and a corresponding number of subcarriers are allocated therein. The ONU may be distributed in any subcarrier within the sub-band. In this way, the ONU can process only its own sub-band and ignore the remaining sub-bands, which facilitates flexible downlink and uplink rates of the ONU. Based on supporting different numbers of subcarriers, different ONUs may have different maximum capacities.

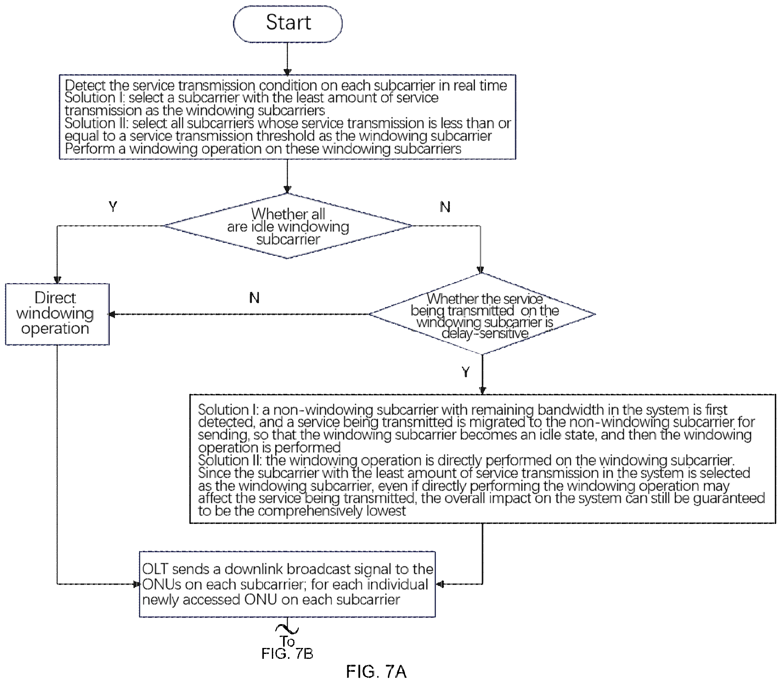

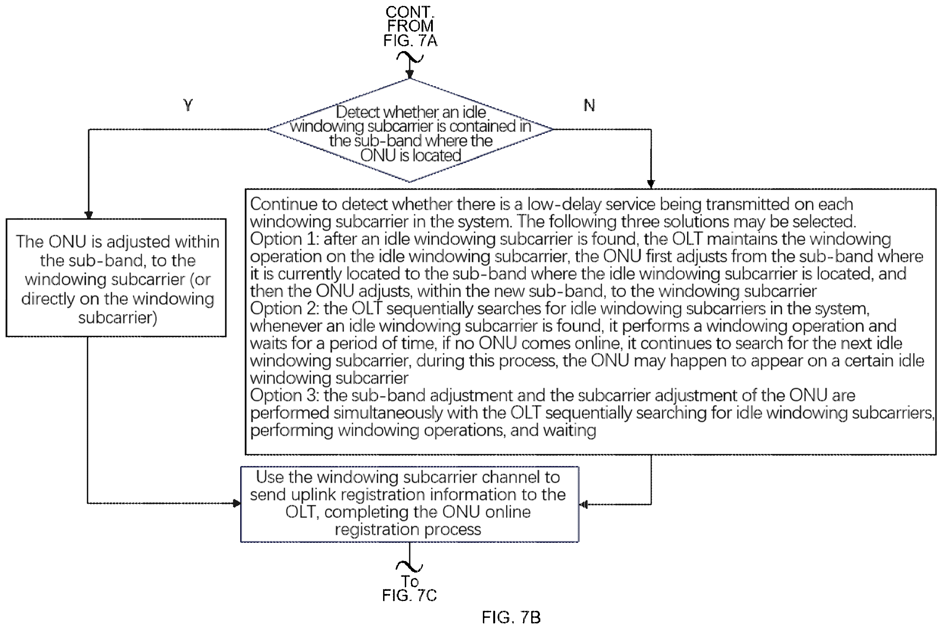

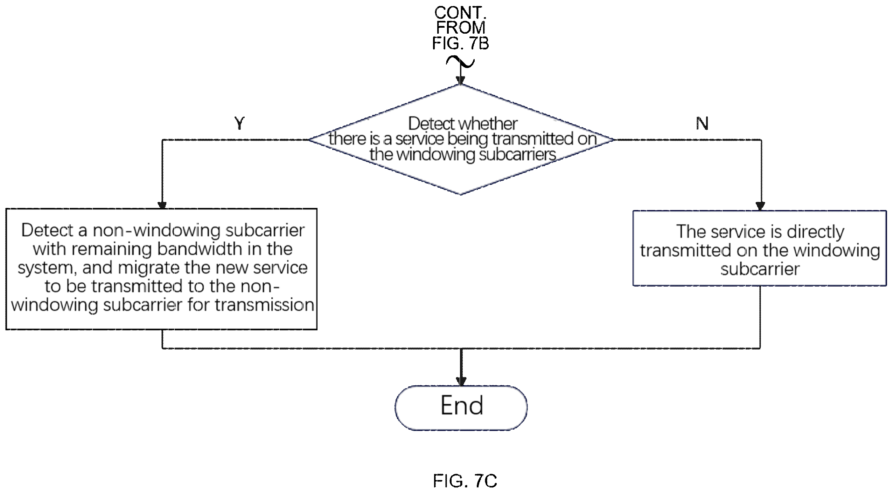

Fig. 7 is a flowchart of a data transmission method for a PON according to an embodiment of the present disclosure. As shown in Fig. 7, the method includes the following steps:
1) In the TFDM multi-subcarrier architecture adopted in the embodiments of the present disclosure, the OLT detects the service transmission condition on each subcarrier in real time, selects the part of subcarriers with the least amount of service transmission as the windowing subcarriers, and the remaining subcarriers are only used for service transmission, without performing the windowing operation.
   In an actual implementation process, the number of subcarriers selected as the part with the least amount of service transmission may be one or more, and may be selectively set according to actual situations and requirements, which is only used as an example for description and is not specifically limited herein.
2) Performing a windowing operation on the selected windowing subcarriers. If all the selected windowing subcarriers are idle windowing subcarriers, the windowing operation is directly performed; if a service is being transmitted on a certain windowing subcarrier, it is first determined whether the service being transmitted is delay-sensitive; if the service is not sensitive, the windowing operation is directly performed. If a delay-sensitive service is provided, two solutions are provided. In the first solution, a non-windowing subcarrier with remaining bandwidth in the system is first detected, and a service being transmitted is migrated to the non-windowing subcarrier for sending, so that the windowing subcarrier becomes an idle state, and then the windowing operation is performed; in the second solution, the windowing operation is directly performed on the windowing subcarrier. Since the subcarrier with the least amount of service transmission in the system is selected as the windowing subcarrier, even if directly performing the windowing operation may affect the service being transmitted, the overall impact on the system can still be guaranteed to be the comprehensively lowest.
3) The OLT sends a downlink broadcast signal to the ONUs on each subcarrier; for each individual newly accessed ONU on each subcarrier, it is first detected whether an idle windowing subcarrier is exactly contained in the sub-band where the ONU is located; if so, the ONU is adjusted within the sub-band, to the windowing subcarrier (or directly on the windowing subcarrier); and uses the channel of the windowing subcarrier to send uplink registration information to the OLT.
4) If not, continue to detect whether there is a low-delay service being transmitted on each windowing subcarrier in the system. The following three solutions may be selected. In the first solution, after an idle windowing subcarrier is found, the OLT maintains the windowing operation on the idle windowing subcarrier. The ONU first adjusts from the sub-band where it is currently located to the sub-band where the idle windowing subcarrier is located, and then the ONU adjusts, within the new sub-band, to the windowing subcarrier, and uses the windowing subcarrier channel to send uplink registration information to the OLT. In the second method, the OLT sequentially searches for idle windowing subcarriers in the system. Whenever an idle windowing subcarrier is found, it performs a windowing operation and waits for a period of time. If no ONU comes online, it continues to search for the next idle windowing subcarrier. If during this process the ONU happens to appear on a certain idle windowing subcarrier, it directly uses the windowing subcarrier channel to send uplink registration information to the OLT. In the third method, the sub-band adjustment and the subcarrier adjustment of the ONU are performed simultaneously with the OLT sequentially searching for idle windowing subcarriers, performing windowing operations, and waiting, so that the ONU uses the windowing subcarrier channel to send uplink registration information to the OLT as soon as possible.

In a practical implementation process, for the above second solution, although it has been determined in advance that the sub-band of the newly accessed ONU does not contain an idle windowing subcarrier, the OLT has already undergone a process of searching for idle windowing subcarriers since that determination. Given that the system is dynamic, a possibility may arise that the ONU happens to appear on an idle windowing subcarrier at this time. Therefore, it is also necessary to search for idle windowing subcarriers at fixed time intervals as described in the second solution. If the ONU happens to appear on a certain idle windowing subcarrier, it directly uses the windowing subcarrier channel to send uplink registration information to the OLT. The fixed time interval may be set according to actual situations and is not limited herein.

In a practical implementation process, the above third solution can be regarded as a combination of the first solution and the second solution, because in the third solution, since the system is dynamic, a new idle windowing subcarrier is generated, thereby enabling the ONU to successfully match the corresponding idle windowing subcarrier. In fact, it can also be considered as adjusting the band where the idle windowing subcarrier is located, which is not limited herein.

5) After the ONU online registration process is completed, detect whether there is a service being transmitted on the windowing subcarriers. If not, the service is directly transmitted on the windowing subcarrier; if yes, detect a non-windowing subcarrier with remaining bandwidth in the system, and migrate the new service to be transmitted to the non-windowing subcarrier for transmission.

In the TFDM multi-subcarrier system according to the embodiments of the present disclosure, a part of the subcarriers serve as windowing subcarriers and perform periodic windowing operations, responsible for completing processes such as registration and ranging required for new ONUs to access the OLT. Services are transmitted on the remaining non-windowing subcarriers, thereby avoiding delays caused by the windowing registration mechanism, achieving low-delay and low-jitter transmission effects. Furthermore, newly accessed ONUs can simultaneously send uplink registration information to the OLT on all idle windowing subcarrier channels, and new services to be transmitted can also be simultaneously transmitted on different subcarriers allocated with bandwidth by the OLT, thereby improving transmission efficiency.

In the specific steps of the above embodiment, in step 1), once the windowing subcarriers are selected, they are not fixed permanently but can be determined in real time according to the amount of services being transmitted on each subcarrier. In step 1), the subcarriers with the least amount of service transmission are selected as windowing subcarriers. However, as service transmission conditions change, the windowing subcarriers may become occupied by a large amount of services, while other non-windowing subcarriers become more idle. At this point, the process returns to step 1) and reselects windowing subcarriers to ensure that the service transmission on the windowing subcarriers is relatively minimal.

### Embodiment 2

In this scenario embodiment, implementing service migration between different subcarriers requires configuring multiple subcarriers for the optical line terminal (OLT), wherein overhead portions of physical data frames (PHY) of downlink ports of each subcarrier are synchronized with each other, and the OLT sends a downlink broadcast signal to each subcarrier using a super-frame counter that performs synchronous counting. In Embodiment 2, how to synchronize the overhead portions of the physical data frames (PHY) of downlink ports of each subcarrier with each other is described in detail.

The overhead portion of the downlink PHY frame. An OLT Channel Termination (CT) transmits continuously in the downlink direction. The transmission of the OLT CT is divided into downlink PHY frames of fixed size. A downlink PHY frame consists of a Physical Synchronization Block (PSBd) and a PHY frame payload. The PHY frame payload is represented by a downstream FS frame. The start of a downlink PHY frame corresponds to the transmission (by OLT CT) or reception (by ONU) of the first bit of its PSBd.

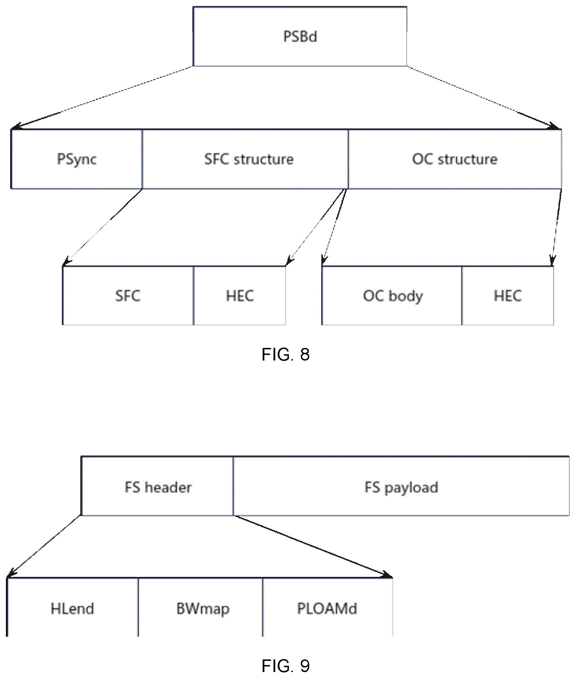

Fig. 8 is a block diagram of a physical synchronization block PSBd according to an embodiment of the present disclosure. As shown in Fig. 8, the downlink physical synchronization block PSBd includes three independent structures: a Physical Synchronization Sequence (PSync), a Super-frame Counter (SFC) structure, and an Operating Control (OC) structure. PSync is a fixed code that the ONU uses to achieve alignment at the downlink PHY frame boundary. The SFC structure contains a super-frame counter SFC and an HEC field, which provides protection for the SFC structure. The OC structure contains an OC body and an HEC field, which provides protection for the OC structure. The OC body contains a PON-ID structure for identifying the OLT within the domain.

Fig. 9 is a schematic diagram of a downstream FS frame structure according to an embodiment of the present disclosure. As shown in Fig. 9, the downstream FS frame consists of a downstream FS frame header and an FS payload. The downstream FS frame header consists of a fixed-size HLend structure and two variable-size partitions: a Bandwidth Map partition (BWmap) and a downlink Physical Layer Operations, Administration and Maintenance (PLOAM) partition. HLend is a 4-byte structure used to control the sizes of the variable-length BWmap and PLOAM partitions in the downstream FS frame header. BWmap is a series of 8-byte allocation structures, each specifying bandwidth allocation for a specific Alloc-ID. A sequence of one or more allocation structures, associated with Alloc-IDs belonging to the same ONU and used for continuous uplink transmission, forms a burst allocation sequence. The OLT CT uses the BWmap partition to assign uplink transmission opportunities to ONUs and to individual Alloc-IDs within each ONU. The frequency and size allocated to each ONU and each Alloc-ID depend on respective service parameters and the current power management mode of each given ONU.

The PSBd and the FS frame header of the downlink PHY frame together constitute the overhead portion of the downlink PHY frame, and their starting position in the downlink PHY frame is fixed. With respect to the multi-subcarrier architecture of the embodiments of the present disclosure, when the solution of Embodiment 1 is adopted to migrate a service to a non-windowing subcarrier for transmission, the timeslots allocated by the OLT to that ONU are also migrated to the non-windowing subcarrier. If the overhead portion in the initial downlink PHY frame on the non-windowing subcarrier is not synchronized with the overhead portion on the windowing subcarrier, a conflict may arise between the migrated timeslot and the overhead portion at a fixed position on the non-windowing subcarrier. This would require a subsequent scheduling algorithm to control the transmission time, resulting in additional delay.

To further reduce the overall system delay, the embodiments of the present disclosure may require that the overhead portions of the initial downlink PHY frames on each subcarrier be synchronized. The signals sent by the OLT are clock-synchronized when arriving at each subcarrier, so that the Psync composed of fixed codes in the overhead portion of each subcarrier are sent at the same time, aligning the boundaries of the downlink PHY frames on each subcarrier. At this time, the super-frame counter SFC counts in the initial super-frame on each subcarrier also remain synchronous and identical. This can be achieved through subcarrier adjustment.

When the overhead portions of the initial downlink PHY frames on all subcarriers are synchronized, service migration can be directly performed using the solution of Embodiment 1 without requiring re-synchronization of clocks, symbols, etc., enabling seamless and flexible service switching, further reducing the overall system delay and improving transmission efficiency.

In summary, the embodiments of the present disclosure provide a data transmission method for a passive optical network (PON), addressing problems arising from the evolution of TDM-PON towards subsequent high-speed PON, and implementing a Time Frequency Division Multiplexing (TFDM) method with low-delay and high transmission efficiency. In a high-speed PON system architecture, the multi-subcarrier system architecture has become one of the technical routes with great application potential due to its multiple advantages. For the multi-subcarrier technical route, the TFDM of the embodiments of the present disclosure essentially integrates Frequency Division Multiplexing (FDM) technology into the TDM architecture. First, under the TFDM multi-subcarrier design, by migrating services to other subcarriers, delays caused by the windowing registration mechanism are avoided, thereby reducing the overall system delay. Second, through the introduction of TFDM multi-subcarriers, when the overhead portions of the initial downlink PHY frames (a PHY frame includes: Preamble, Header, Payload) on each subcarrier are synchronized, services can be directly migrated without additional synchronization procedures such as clock and symbol synchronization, further reducing the overall system delay and improving transmission efficiency. Automatically selecting windowing subcarriers based on real-time service transmission conditions and initial overhead synchronization of subcarriers are important technical features provided by the embodiments of the present disclosure. The TFDM architecture based on the multi-subcarrier technical route in the PON field proposed by the embodiments of the present disclosure further improves the large delay problem of this architecture and facilitates advanced layout and planning in the selection of high-speed PON technical routes.

The above are only preferred embodiments of the present disclosure and are not intended to limit the embodiments of the present disclosure. For those skilled in the art, various modifications and variations may be made to the embodiments of the present disclosure. Any modifications, equivalent substitutions, improvements, etc. made within the principle of the embodiments of the present disclosure shall be included within the protection scope of the embodiments of the present disclosure.

## Claims

1. A data transmission method for a passive optical network (PON), comprising:
detecting, by an optical line terminal (OLT), a service transmission condition of each subcarrier, and selecting a subcarrier as a windowing subcarrier;
sending, by the OLT, a downlink broadcast signal to each subcarrier, to match a corresponding idle windowing subcarrier for a newly accessed optical network unit (ONU); and
receiving, by the OLT, uplink registration information of the ONU through the idle windowing subcarrier, to perform data transmission.

2. The method according to claim 1, wherein the detecting, by the OLT, a service transmission condition of each subcarrier, and selecting a subcarrier as a windowing subcarrier comprises:
detecting, by the OLT, the service transmission condition of each subcarrier, and selecting a subcarrier with the least amount of service transmission as the windowing subcarrier; or
detecting, by the OLT, the service transmission condition of each subcarrier, and selecting a subcarrier whose service transmission is less than or equal to a service transmission threshold as the windowing subcarrier.

3. The method according to claim 1, wherein after the selecting a subcarrier as a windowing subcarrier, the method further comprises:
detecting, by the OLT, whether a delay-sensitive service exists on the windowing subcarrier, and in response to detecting that the delay-sensitive service exists, migrating the delay-sensitive service to a non-windowing subcarrier that has remaining bandwidth in the OLT for transmission.

4. The method according to claim 1, wherein matching the corresponding idle windowing subcarrier for the newly accessed ONU comprises:
detecting, by the OLT, whether a first sub-band of the newly accessed ONU contains an idle windowing subcarrier;
in response to a positive detection result, adjusting the ONU, within the first sub-band, to the idle windowing subcarrier;
in response to a negative detection result, adjusting the first sub-band of the ONU to a second sub-band where the idle windowing subcarrier is located, and adjusting the ONU, within the second sub-band, to the idle windowing subcarrier; or, updating detection of the idle windowing subcarrier at fixed time intervals, so that the ONU matches the corresponding idle windowing subcarrier; or, adjusting the second sub-band and the first sub-band to a third sub-band at the same time, and adjusting the ONU, within the third sub-band, to the idle windowing subcarrier.

5. The method according to claim 1, wherein before the detecting, by the OLT, a service transmission condition of each subcarrier, the method further comprises:
configuring a plurality of subcarriers for the OLT, wherein overhead portions of physical data frames (PHY) of downlink ports of each subcarrier are synchronized with each other.

6. The method according to claim 1, further comprising:
re-selecting a new windowing subcarrier according to the service transmission condition of each subcarrier, to perform data transmission for the newly accessed ONU.

7. The method according to claim 1, wherein the sending, by the OLT, a downlink broadcast signal to each subcarrier comprises:
sending, by the OLT, the downlink broadcast signal to each subcarrier using a super-frame counter that performs synchronous counting.

8. The method according to claim 1, wherein after the receiving, by the OLT, uplink registration information of the ONU through the idle windowing subcarrier, the method further comprises:
sending, by the ONU, data to the OLT by means of time division multiplexing (TDM) or frequency division multiplexing (FDM).

9. A computer-readable storage medium, having a computer program stored therein, wherein the computer program is configured to, when being executed by a processor, implement the method according to any one of claims 1 to 8.

10. An electronic apparatus, comprising a memory, a processor, and a computer program that is stored in the memory and executable by the processor, wherein the processor is configured to, when executing the computer program, implement the method according to any one of claims 1 to 8.
